# EUROPÄISCHE PATENTSCHRIFT

(11) **EP 0 455 869 B1**
(45) Veröffentlichungstag und Bekanntmachung des Hinweises auf die Patenterteilung: **27.07.1994**
(21) Anmeldenummer: 90123645.5
(22) Anmeldetag: 08.12.1990
(51) Int. Cl.: H02P 7/62, H02P 7/622

(54) **Schaltungsanordnung für einen Zentrifugenantrieb**
Circuit arrangement for driving a centrifuge
Circuit pour l'entraînement d'une machine centrifuge

(30) Priorität: 05.05.1990 DE 4014448
(43) Veröffentlichungstag der Anmeldung: 13.11.1991
(73) Patentinhaber: Heraeus Sepatech GmbH, D-37502 Osterode am Harz (DE)
(72) Erfinder: Uhlendorf, Rüdiger, W-3402 Niemetal-Löwenhagen (DE)
(74) Vertreter: Kühn, Hans-Christian

(56) Entgegenhaltungen:
- DE-U- 8 714 498
- US-A- 4 651 079
- US-A- 4 851 751

## Beschreibung

Die Erfindung betrifft eine Schaltungsanordnung zur Drehzahlvorwahl eines Elektromotors mit einem vorgeschalteten Wechselrichter mit einer aus zwei als Feldeffekt-Transistoren ausgebildeten, steuerbaren elektronischen Schaltern bestehenden ersten Reihenschaltung, die an eine Gleichspannungsquelle angeschlossen ist, wobei zwischen den Feldeffekt-Transistoren eine Verbindung zu einem ersten Anschluß des Elektromotors abgezweigt ist, der über seinen zweiten Anschluß mit einer zweiten, ebenfalls an die Gleichspannungsquelle angeschlossenen Reihenschaltung aus wenigstens zwei Kondensatoren als Verbindungspunkt dieser Kondensatoren angeschlossen ist, wobei die Ansteuerung der Feldeffekt-Transistoren durch eine Steuerlogik erfolgt, sowie eine Verwendung der Schaltungsanordnung.

Bei Zentrifugen, wie sie aus dem Prospekt 2C2.85/VN Ku der Heraeus Christ GmbH, Osterode bekannt sind, besteht der Zentrifugenantrieb aus einem Asynchron-Motor, dem ein Dreiphasenwechselrichter mit drei Halbleiter-Brücken vorgeschaltet ist. Der prinzipielle Aufbau solcher Wechselrichter ist beispielsweise aus dem Buch "Leistungselektronik" von Rudolf Lappe, Springer Verlag Berlin, Heidelberg, New York, 1988, S. 267 sowie S. 276-280 bekannt. Die Ansteuerung des für den Zentrifugenantrieb genannten Motors erfolgt aus einer Steuerlogik mit Impulsgenerator, Frequenzteiler und programmierbarem Zähler, wobei jeder der sechs Feldeffekt-Transistoren über einen Treiber und eine eigene Transformator-Kopplung angesteuert wird. Die mit Hilfe von Frequenzteilern erzielbare Drehzahlverstellung wird mittels eines Drehzahlvorwahlreglers eingestellt und mit Hilfe eines Anzeigeinstrumentes kontrolliert. Nach Abschluß des Zentrifugiervorganges wird der Asynchron-Motor als Generator betrieben und die erzeugte Bremsenergie in einem separaten, durch Lüfter gekühlten Bremswiderstand vernichtet.

Als problematisch erweist sich der verhältnismäßig aufwendige Aufbau der bekannten Vorrichtung, wobei die sechs elektronisch gesteuerten Schalter eine ebenso große Anzahl von Ansteuerungselementen, d.h. Transformatoren, Steuersignalverstärkern sowie einer entsprechenden Anzahl von Ausgängen einer Steuerlogik erfordern. Beim Einsatz eines Mikroprozessors zur Wahrnehmung der Aufgaben der Steuerlogik ist ein erheblicher Programmieraufwand erforderlich. Die Ansteuerungselektronik wird insbesondere dann sehr aufwendig, wenn verschiedene Drehzahlbereiche nach einem vorgegebenen Programm eingestellt werden sollen. Ein weiteres Problem ist in dem verhältnismäßig aufwendigen Bremsverfahren zu sehen, da neben einer eigenen Umsteuerelektronik zusätzliche Wärmeabführungsmaßnahmen erforderlich sind.

Weiterhin ist aus der US-A-46 51 079 eine Schaltungsanordnung mit einem pulsbreiten-modulierten Invertersystem bekannt, welches zur Ansteuerung eines Einphasen-Induktionsmotors dient; dabei soll ein konstantes Amplituden-Frequenzverhältnis aufrechterhalten werden; hierzu ist ein Funktionsgenerator vorgesehen, in dem eine Dreiecksspannung fester Frequenz erzeugt wird, während ein Sinuswellengenerator zur Erzeugung einer Sinusspannung mit veränderbarer Frequenz vorgesehen ist. Beide Signale werden einem Differentialkomparator zugeführt, der eine pulsbreitenmodulierte Rechteckwelle ausgibt, wobei eine Gewichtung der Pulsbreiten-Modulation nach der Sinus-Funktion erfolgt; mittels Inverter und Verstärker wird im Gegentaktverfahren ein Transistor-Brückenwechselrichter angesteuert, von dem der eine Zweig aus zwei jeweils im Gegentakt anzusteuernden Feldeffekt-Transistoren und der andere Zweig aus zwei in Serie geschalteten Kondensatoren besteht; dabei ist im Brückzweig ein aus Induktivität und Kapazität bestehendes Tiefpassfilter angeordnet, zu dessen Kapazität der Induktionsmotor parallel geschaltet ist. Auf diese Weise ist gewährleistet, daß ein konstantes Motorspannungs-Frequenzverhältnis erzielt wird.

Als problematisch ist dabei jedoch der Betrieb des Antriebsmotores bei höheren Drehzahlen zu sehen, da der Gate-Bereich der Feldeffekt-Transistoren bei hohen Drehzahlen, d.h. hohen Frequenzen im Sperrzustand nicht mehr rasch genug von Ladungsträgern im Gate-Bereich geräumt werden kann, so daß möglicherweise undefinierte Schaltzustände im Wechselrichter auftreten.

Aus dem Gebrauchsmuster DE-U-87 14 498 ist ein Antrieb für Pumpen oder Lüfter mittels Drehstromasynchronmaschine und Umrichter variabler Frequenz bekannt, wobei ein Gleichrichter als doppelte Einwegschaltung mit nachgeschaltetem Wechselrichter vorgesehen ist; der Wechselrichter weist zwei elektrisch in Reihe geschaltete Halbleiterventile als Feldeffekt-Transistoren auf, denen jeweils eine Freilaufdiode elektrisch parallel geschaltet ist; dabei ist eine erste Phase der Drehstromasynchronmaschine mit einem Verbindungspunkt von zwei in Reihe geschalteten Kondensatoren des Gleichrichters und eine zweite Phase der Drehstromasynchronmaschine mit einem Verbindungspunkt der elektrisch in Reihe geschalteten Halbleiterventile (Feldeffekt-Transistoren)
des Wechselrichters verbunden. Auch hier tritt das Problem auf, daß bei hohen Drehzahlen, wie sie bei Zentrifugenantrieben auftreten, der Gate-Bereich der vorher angesteuerten Feldeffekt-Transistoren von Ladungsträgern geräumt sein muß, um undefinierbare Betriebszustände des Wechselrichters zu vermeiden.

Die Erfindung stellt sich die Aufgabe, eine Verringerung der steuerbaren Schalter sowie des Steueraufwandes und der Verlustleistungen zu erzielen. Darüberhinaus soll eine Abbremsung von Antriebsmotor - insbesondere von Zentrifugenantrieben - des Zentrifugenantriebs ohne zusätzliche Bauelemente wie Bremswiderstand oder Lüfter erfolgen.

Die Aufgabe wird durch die kennzeichnenden Merkmale des Anspruchs 1 gelöst. Vorteilhafte Ausgestaltungen des Gegenstandes der Erfindung sind in den Unteransprüchen angegeben.

In einer bevorzugten Ausführungsform sind die zwischen Gate und Source abgeschlossenen Steuerkreise der als steuerbare Schalter eingesetzten Feldeffekt-Transistoren mit zwei oder mehreren in Reihe geschalteten Photodioden versehen, die sich im Strahlungsbereich einer vom Impulsgenerator gespeisten Leuchtdiode befinden.

Weiterhin ist parallel zur Reihenschaltung der Photodioden die Kollektor-Emitter-Strecke eines Photo-Transistors geschaltet, dessen Basis sich im Strahlungsbereich einer weiteren Leuchtdiode befindet, die zur Abgabe von Löschimpulsen, d.h. zur Abgabe von Einschaltimpulsen der Feldeffekt-Transistoren dient.

Als vorteilhaft erweist sich neben einem preisgünstigen Aufbau die verhältnismäßig hohe Energieersparnis, die einfache Bremsmöglichkeit sowie deren mögliche Auslösung durch ein Rechnerprogramm; ein weiterer Vorteil ist in der Verstellmöglichkeit von Drehzahlen oder Drehzahl-Zeit-Funktionen (Frequenz-Profil) durch einfache Umprogrammierung des als Impulsgenerator dienenden Mikroprozessor zu sehen; auf eine zusätzliche Stromversorgung für die Ansteuerungs-Stufen kann verzichtet werden, da die für den als Impulsgenerator dienenden Mikroprozessor erforderliche Stromversorgung auch für die Ansteuerung der Feldeffekt-Transistoren verwendbar ist. Durch Programmierung bzw. Umprogrammierung des Mikroprozessors ist die Schaltungsanordnug für Motoren verschiedener Leistungsklassen einsetzbar.

Im folgenden ist der Gegenstand der Erfindung anhand der Figuren 1 bis 3 näher erläutert. Figur 1 zeigt eine Schaltungsanordnung für den Zentrifugenantrieb mit Wechselrichter in seiner Grundschaltung, Figur 2 die Schaltungsanordnung für den Wechselrichter mit seiner Ansteuerung; Figur 3 zeigt als Ausschnitt einen Steuer-Kreis für einen als steuerbaren Schalter dienenden Feldeffekt-Transistor.

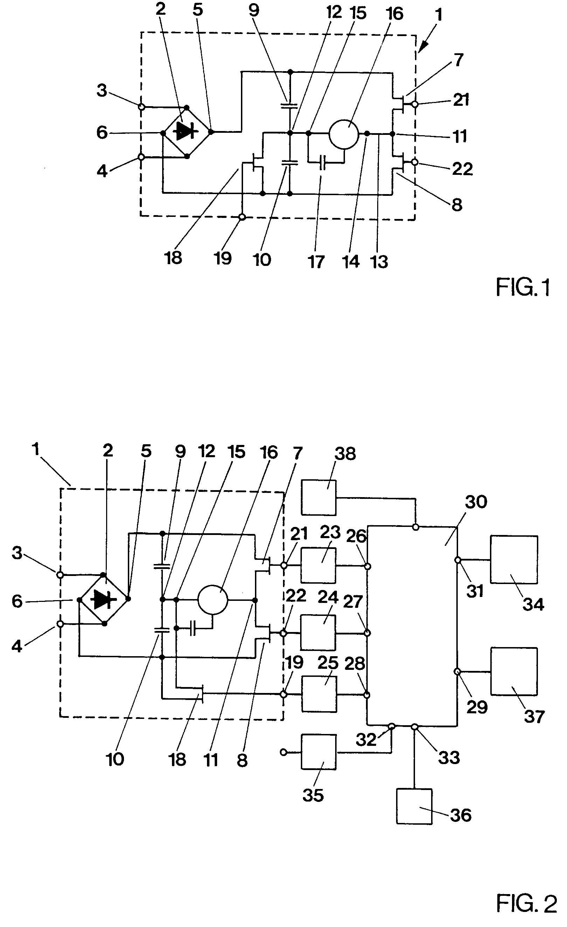

Gemäß Figur 1 weist der mit Zentrifugenantrieb versehene Wechselrichter 1 einen Gleichrichter 2 auf, der mit seinen Anschluß-Klemmen 3,4 an ein Wechselspannungsnetz angeschlossen ist; auf der Ausgansseite des Gleichrichters 2 befinden sich die Anschußklemmen 5 und 6, die zwei zueinander parallel geschaltete Reihenschaltungen speisen, von denen eine erste Reihenschaltung zwei in Serie geschaltete Feldeffekt-Transistoren 7,8 als elektronische Schalter aufweist, während die zweite Reihenschaltung zwei in Serie geschaltete Kondensatoren 9,10 enthält. Zwischen den jeweiligen Verbindungspunkten 11,12 der elektronischen Schalter 7,8 und der Kondensatoren 9,10 ist ein Brückenzweig 13 geschaltet, an dessen Anschlußklemmen 14,15 der Zentrifugenantrieb in Form eines Kondensator-Motors 16 mit Kondensator 17 angeschlossen ist.

Verbindungspunkt 12 ist über einen dritten Feldeffekt-Transistor 18 mit der Ausgangsklemme 6 des Gleichrichters verbunden. Die Ansteuerung des Gate dieses Feldeffekt-Tranistors erfolgt über Steuereingang 19. Die Steuereingänge der Feldeffekt-Transitoren 7,8 sind mit den Bezugsziffern 21,22 bezeichnet.

Im folgenden wird die prinzipielle Arbeitsweise der in Figur 1 dargestellten Schaltungsanordnung näher erläutert.

Zu Beginn der Inbetriebnahme werden die Kondensatoren 9,10 jeweils auf eine Gleich-Spannung aufgeladen, deren Summe der am Ausgang des Gleichrichters 2 anliegenden Gleichspannung entspricht, wobei Ausgangsklemme 5 ein positives, Ausgangsklemme 6 ein negatives Potential führen. Wird nun Feldeffekt-Transistor 7 über Steuereingang 21 angesteuert, so entlädt sich Kondensator 9 über die Drain-Source-Strecke des Feldeffekt-Transistors 7 und der Entladungsstrom fließt - in positiver Richtung gesehen - über Verbindungspunkt 11 zur Anschlußklemme 14 des Motors 16 und gelangt über Anschlußklemme 15, Verbindungspunkt 12 zur negativen Platte des Kondensators 9 zurück. Der Kondensator-Motor 16 wird somit von einem Strom ausgehend von Anschlußklemme 14 Richtung Anschlußklemme 15 durchflossen. Nach Erlöschen des Steuersignals am Feldeffekt-Transistor 7 wird der den Kondensator 9 entladende Stromkreis geöffnet und mit einem Ansteuersignal über Steuereingang 22 Feldeffekt-Transistor 8 angesteuert, so daß sich Kondensator 10 über Anschlußklemme 15, Kondensator-Motor 16 und Anschlußklemme 14 sowie den Transistor 8 entlädt; in diesem Fall fließt der Strom - in positiver Richtung gesehen - von Klemme 15 zu Klemme 14 und hat somit seine Richtung gewechselt, so daß vom Motor 16 aus gesehen ein Wechselzyklus aus einer Halbwelle mit positiver Amplitude und einer Halbwelle mit negativer Amplitude erfolgt ist. Nach der jeweiligen Entladung erfolgt eine erneute Aufladung der Kondensatoren, so daß diese für einen neuen Entladungszyklus zur Verfügung stehen.

Zur Abbremsung des Motors 16 wird der dritte Feldeffekt-Transistor 18 über Eingang 19 durch Abgabe eines Bremssignals kontinuierlich angesteuert, so daß der Kondensator-Motor 16 in Zusammenwirken mit Feldeffekt-Transistor 7 im Gleichstrombetrieb läuft und damit sofort abgebremst wird. Die durch Bremsbetrieb in den Wicklungen des Motors entstehende Wärme wird durch den im Motor eingebauten Lüfter abgeführt.

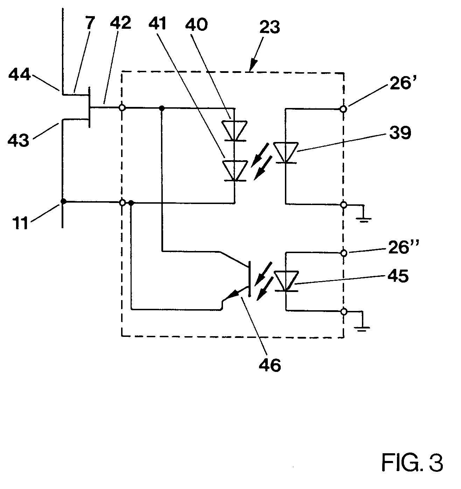

Gemäß Figur 2 erfolgt die Ansteuerung der Feldeffekt-Transistoren 7,8,18 über mit ihren Anschlußklemmen 19,21,22 verbundene Steuerelemente 23,24,25, die anhand der Figur 3 näher erläutert sind. Die Steuerelemente erhalten ihre Signale über die Ausgänge 26,27,28 des als Impuls-Generator dienenden Mikroprozessors 30, welcher mit Eingängen 31,32 und 33 versehen ist, welche Signale von der Tastatur 34, der Deckelschloßverriegelung 35 und gegebenenfalls einer Schnittstelle 36 zur Ansteuerung der Zentrifuge den Mikroprozessor 30 eingeben. Die Anzeige des jeweiligen Betriebszustandes erfolgt über eine weitere Ausgangsklemme 29 zu einer Anzeige 37. Die Stromversorgung des Mikroprozessors 30 sowie der Ansteuereinheiten 23,24,25 erfolgt über eine hier nur symbolisch dargestellte Stromversorgung 38, welche beispielsweise eine Spannung von 5 Volt erzeugt.

Figur 3 zeigt den Aufbau der den in Figur 2 symbolisch dargestellten Steuereinheit 23 mit ihrem in 26' und 26'' aufgespaltenen Steueranschluß des Steuerausgangs 26 des Mikroprozessors 30.

Die in Figur 3 dargestellte Schaltungsanordnung arbeitet folgendermaßen:
Während der Ansteuerphase wird über Eingang 26' die Lumineszenzdiode durch ein Ausganssignal des Mikroprozessors 30 betrieben und gibt ein optisches Signal an die in ihrem Bestrahlungsbereich befindlichen Photodioden 40,41 ab, welche in einer Reihenschaltung zwischen Gate 42 und Source 43 des Feldeffekt-Transistors 7 geschaltet ist. Aufgrund der Reihenschaltung der Photodioden wird eine genügend hohe Steuerspannung erzielt, so daß die Strecke zwischen Gate 44 und Source 42 durchgeschaltet und Feldeffekt-Transistor 7 somit leitend wird. Zur Sperrung des Feldeffekt-Transistors 7 wird dann über Eingang 26'' ein die Lumineszenzdiode 45 erleuchtendes Löschsignal gegeben, wodurch die im Strahlungsbereich der Lumineszenzdiode 45 befindliche Basis eines Photo-Transistors 46 beleuchtet wird und die parallel zu der Reihenschaltung der Dioden 40,41 angeschlossene Kollektor-Emitter-Strecke des Photo-Transistors 46 durchgeschaltet wird und der Feldeffekt-Transistor somit sperrt. Die Sperrung des Feldeffekt-Transistors ist auch während einer eventuell weiter geführten Ansteuerung über Eingang 26' wirksam. Die Ansteuerung des Feldeffekt-Transistors 8 erfolgt in gleicher Weise wie anhand der Figur 3 beschrieben, wobei selbstverständlich eine Phasenverschiebung zur Erzeugung der Wechselspannung bei den jeweiligen Steuersignalen vorliegt.

Die Ansteuerung des zur Abbremsung erforderlichen Feldeffekt-Transistors 18 kann prinzipiell nach der gleichen Schaltung, wie sie in Figur 3 dargestellt ist erfolgen, wobei allerdings auf die Funktion des Photo-Transistors verzichtet werden kann, da in der Praxis kein präziser Löschungszeitpunkt für das Bremssignal erforderlich ist. Die zur Ansteuerung erforderlichen Impulse, Impulspausen und Impulsfolgefrequenzen werden vom Mikroprozessor durch Programmierung generiert, und können über einen in einem Festwertspeicher abgelegten Datensatz maschinenspezifisch dem gewünschten Betriebsverhalten des Zentrifugenmotors angepaßt werden. Es können somit mit einer einzigen Schaltungsanordnung Motoren verschiedener Leistungs- und Drehzahlcharakteristiken angesteuert werden. Die Programmierung bzw. Umprogrammierung erfolgt gemäß Fig. 3 durch die Schnittstelle 36 des Mikroprozessors.

## Patentansprüche

1. Schaltungsanordnung zur Drehzahlvorwahl eines Elektromotors (16) mit einem vorgeschalteten Wechselrichter mit einer aus zwei als Feldeffekt-Transistoren (7, 8) ausgebildeten, steuerbaren elektronischen Schaltern bestehenden ersten Reihenschaltung, die an eine Gleichspannungsquelle (2) angeschlossen ist, wobei zwischen den Feldeffekt-Transistoren (7, 8) eine Verbindung (11) zu einem ersten Anschluß (14) des Elektromotors (16) abgezweigt ist, der über seinen zweiten Anschluß (15) mit einer zweiten, ebenfalls an die Gleichspannungsquelle angeschlossenen Reihenschaltung aus wenigstens zwei Kondensatoren (9, 10) als Verbindungspunkt (12) dieser Kondensatoren angeschlossen ist, wobei die Ansteuerung der Feldeffekt-Transistoren durch eine Steuerlogik (30) erfolgt, dadurch gekennzeichnet, daß der Elektromotor ein Kondensator-Motor (16) ist, und daß zur Ansteuerung der Feldeffekt-Transistoren (7, 8) jeweils ein erster Optokoppler (39, 40, 41) vorgesehen ist, der eingangsseitig von einem Impulsgenerator der Steuerlogik (30) einen Steuerimpuls erhält und ausgangsseitig an die Gate-Source-Strecke des jeweiligen Feldeffekt-Transistors (7, 8) eine Steuerspannung anlegt und daß jeweils ein zweiter Optokoppler vorgesehen ist, bei dem die Kollektor-Emitter-Strecke eines Photo-Transistors (46) als Kurzschluß-Schalter parallel zur Photodiode oder zur Reihenschaltung von Photodioden (40, 41) des ersten Optokopplers geschaltet ist, wobei die Basis des Photo-Transistors (46) sich im Strahlungsbereich einer Leuchtdiode (45) befindet, die zur Aufnahme von Löschimpulsen mit dem Impulsgenerator verbunden ist, und daß der zweite Anschluß (15) des Kondensatormotors (16) über einen dritten Feldeffekt-Transistor (18) als steuerbaren Schalter mit einem der beiden Pole der Gleichspannungsquelle verbunden ist, wobei der dritte Feldeffekt-Transistor (18) unter gleichzeitiger Ansteuerung des einen Feldeffekt-Transistors (7) durch ein Bremssignal ansteuerbar ist.

2. Schaltungsanordnung nach Anspruch 1, dadurch gekennzeichnet, daß im Ansteuerungskreis zwischen Gate und Source der Feldeffekt-Transistoren (7, 8) wenigstens eine Photo-Diode (40, 41) geschaltet ist, die sich im Strahlungsbereich einer mit dem Impulsgenerator verbundenen Leuchtdiode (39) befindet und zusammen mit der Photo-Diode (40, 41) den ersten Optokoppler bildet.

3. Schaltungsanordnung nach Anspruch 2, dadurch gekennzeichnet, daß wenigstens zwei Photo-Dioden (40, 41) zwischen Gate und Source der Feldeffekt-Transistoren (7, 8) in Reihe geschaltet sind.

4. Schaltungsanordnung nach einem der Ansprüche 1 bis 3, dadurch gekennzeichnet, daß sie als Impulsgenerator einen Mikroprozessor (30) enthält.

5. Verwendung der Schaltungsanordnung nach einem der Ansprüche 1 bis 4 zur Drehzahlvorwahl eines als Zentrifugenantrieb dienenden Elektromotors.

## Claims

1. A switching arrangement for the preselection of the rotational speed of an electric motor (16) with an inverter connected on the supply side, with a first series arrangement consisting of two controllable electronic switches constructed as field effect transistors (7,8), which is connected to a direct current source (2), in which between the field effect transistors (7,8) connection (11) to a first terminal (14) of the electric motor(16) is branched, which via its second terminal (15) is connected with a second series arrangement, likewise connected to the direct current source, of at least two capacitors (9,10) as connection point (12) of these capacitors, in which the controlling of the field effect transistors takes place through a control logic (30), characterised in that the electric motor is a capacitor motor (16), and that for the controlling of the field effect transistors (7,8) in each case a first optocoupler (39,40,41) is provided, which receives on the input side a control impulse from an impulse generator of the control logic (30) and on the output side applies a control voltage to the gate-source section of the respective field effect transistor (7,8) and that in each case a second optocoupler is provided, in which the collector-emitter section of a phototransistor (46) is connected as short-circuiting switch parallel to the photodiode or to the series arrangement of photodiodes (40,41) of the first optocoupler, in which the base of the phototransistor (46) is situated in the range of radiation of a light emitting diode (45), which is connected with the impulse generator to receive quench impulses, and that the second terminal (15) of the capacitor motor (16) is connected via a third field effect transistor (18) as controllable switch with one of the two poles of the direct current source, in which the third field effect transistor (18) is controllable by a brake signal with simultaneous controlling of the one field effect transistor (7).

2. A switching arrangement according to Claim 1, characterised in that in the controlling circuit between gate and source of the field effect transistors (7,8) at least one photodiode (40,41) is connected, which is situated in the radiation range of a light emitting diode (39), connected with the impulse generator, and which together with the photodiode (40,41) forms the first optocoupler.

3. A switching arrangement according to Claim 2, characterised in that at least two photodiodes (40,41) are connected in series between gate and source of the field effect transistors (7,8).

4. A switching arrangement according to one of Claims 1 to 3, characterised in that it contains a microprocessor (30) as impulse generator.

5. The use of the switching arrangement according to one of Claims 1 to 4 for the preselection of the rotational speed of an electric motor serving as a centrifuge drive.

## Revendications

1. Circuit de présélection de la vitesse de rotation d'un moteur électrique (16), comportant un convertisseur qui est monté en amont et qui comprend un premier circuit de série qui est constitué de deux interrupteurs électroniques conçus sous forme de transistors à effet de champ (7, 8) et pouvant être commandés, et qui est relié à une source (2) de tension continue, étant précisé qu'entre les transistors à effet de champ (7, 8) est dérivée une liaison (11) à une première borne (14) du moteur électrique (16) qui, par l'intermédiaire de sa seconde borne (15), est relié à un second circuit de série également relié à la source de tension continue et constitué d'au moins deux condensateurs (9, 10), la seconde borne faisant point de liaison (12) de ces condensateurs, étant précisé que l'activation des transistors à effet de champ se fait au moyen d'un circuit logique de commande (30), circuit caractérisé par le fait que le moteur électrique est un moteur à condensateur (16) et par le fait que pour l'activation de chacun des transistors à effet de champ (7, 8) est prévu un premier coupleur optique (39, 40, 41) qui, côté entrée reçoit une impulsion de commande en provenance d'un générateur d'impulsions du circuit logique de commande (30) et, côté sortie, applique une tension de commande à l'élément de circuit grille-source du transistor à effet de champ respectif (7, 8), et par le fait qu'est prévu pour chacun un second coupleur optique dans le cas duquel l'élément de circuit collecteur-émetteur d'un photo-transistor (46) est monté en commutateur de mise en cours circuit, parallèlement à la photo-diode ou au circuit de série des photo-diodes (40, 41) du premier coupleur optique, étant précisé que la base du photo-transistor (46) se trouve dans la zone de rayonnement d'une diode électroluminescente (45) qui est reliée avec le générateur d'impulsions pour recevoir des impulsions d'extinction, et par le fait que la seconde borne (15) du moteur à condensateur (16) est reliée, par l'intermédiaire d'un troisième transistor à effet de champ (18) agissant sous forme d'interrupteur activable, avec l'un des deux pôles de la source de tension continue, étant précisé que le troisième transistor à effet de champ (8) peut être activé par un signal de freinage avec activation simultanée du premier transistor à effet de champ (7).

2. Circuit selon la revendication, caractérisé par le fait que dans le circuit d'activation, entre grille et source des transistors à effet de champ (7, 8), est montée au mois une photo-diode (40, 41) qui se trouve dans la zone du rayonnement d'une diode électroluminescente (39) reliée avec le générateur d'impulsions et qui forme, avec la photo-diode (40, 41), le premier coupleur optique.

3. Circuit selon la revendication 2, caractérisé par le fait qu'au moins deux photo-diodes (40, 41) sont montées en série entre grille et source des transistors à effet de champ (7, 8).

4. Circuit selon l'une des revendications 1 à 3, caractérisé par le fait que comme générateur d'impulsions il contient un microprocesseur (30).

5. Emploi d'un circuit selon l'une des revendications 1 à 4, pour la présélection de la vitesse de rotation d'un moteur électrique servant d'entrainement de centrifugeuse.
